# EUROPEAN PATENT APPLICATION

(11) **EP 2 781 310 A2**
(43) Date of publication of application: **24.09.2014**
(21) Application number: 14161049.3
(22) Date of filing: 21.03.2014
(51) Int. Cl.: B25F 5/00, B25F 5/02

(54) **Pneumatic tool driving assembly**

(30) Priority: 22.03.2013 TW 102110268
(71) Applicant: Basso Industry Corp., Taichung 40768 (TW)
(72) Inventor: Hua, Chiang, 40768 Taichung (TW); Liu, Yu-Chieh, 40768 Taichung (TW)
(74) Representative: Regimbeau

(57) **Abstract**

A pneumatic tool driving assembly comprises: a valve housing (30) defining first and second chambers (301, 302) and a valve opening (303) ; a valve mechanism (36) including a valve actuator (361) that extends into the valve housing (30), and a valve member (362) that is disposed for closing the valve opening (303) and that is actuated by the valve actuator (361) to uncover the valve opening (303); and a trigger mechanism (2) pivoted to an exterior of the valve housing (30) so as to be pressible relative to the valve housing (30). The trigger mechanism (2) includes a detachable wrench (22) that is spaced apart from the valve housing (30), and a pivot joint (20) that is pivoted to the valve housing (30) and that brings the wrench (22) to pivot relative to the valve housing (30).

## Description

This invention relates to a pneumatic tool driving assembly, more particularly to a pneumatic tool driving assembly including a trigger mechanism with a wrench that is pivotable relative to and spaced apart from a valve housing.

Referring to Fig. 1, Taiwanese Patent No. I336650 discloses a conventional pneumatic tool driving assembly 1. The conventional pneumatic tool driving assembly 1 includes a valve housing 11 that is adapted to be connected to a tool (not shown), a valve mechanism 12, a trigger mechanism 13 that is pivoted to the valve housing 11 for triggering the valve mechanism 12, and a wrench 14 that is specifically used for replacing different types of tools (not shown) to be connected to and driven by the conventional pneumatic tool driving assembly 1. The valve housing 11 is formed with an accommodating slot 111 for accommodating the wrench 14 therein. Since the accommodating slot 111 is hidden behind the trigger mechanism 13, it is difficult to gain access to the wrench 14 and to put the wrench 14 back into the accommodating slot 111, and there lacks an indication to remind the user to put the wrench 14 back into the accommodating slot 111, which may increase the chances of losing the wrench 14.

Therefore, the object of the present invention is to provide a pneumatic tool driving assembly that can overcome at least one of the aforesaid drawbacks associated with the prior art.

According to this invention, there is provided a pneumatic tool driving assembly that comprises: a valve housing defining first and second chambers and a valve opening that is disposed between the first and second chambers for fluid communication between the first and second chambers; a valve mechanism including a valve actuator that extends into the valve housing, and a valve member that is disposed in the valve housing for closing the valve opening and that is actuated by the valve actuator to uncover the valve opening; and a trigger mechanism pivoted to an exterior of the valve housing so as to be pivotably pressible relative to the valve housing between a non-pressed position and a pressed position. The trigger mechanism drives the valve actuator to move to actuate the valve member when moving from the non-pressed position to the pressed position. The trigger mechanism includes a detachable wrench that is spaced apart from the valve housing, and a pivot joint that is pivoted to the valve housing and that brings the wrench to pivot relative to the valve housing between the non-pressed position and the pressed position.

In drawings which illustrate embodiments of the invention,

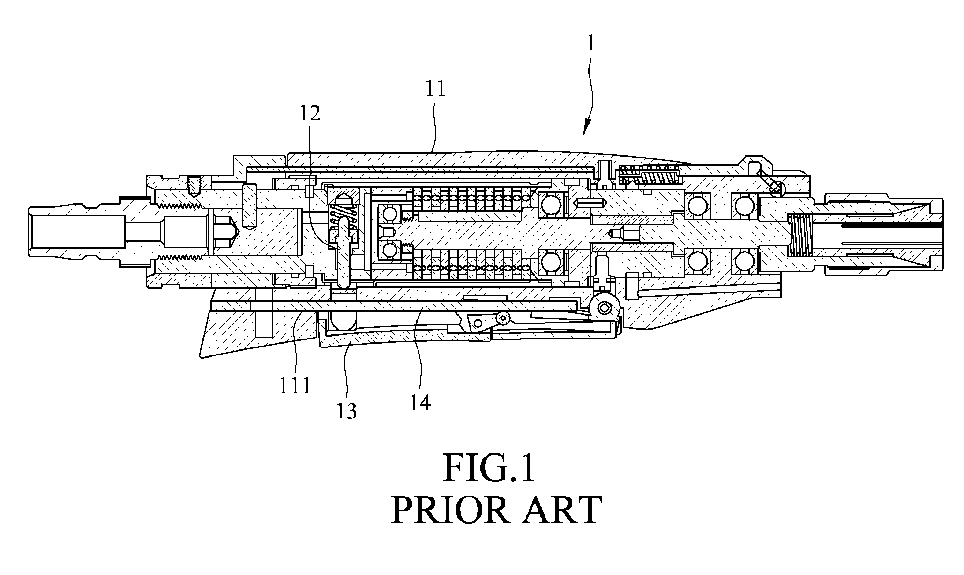

Fig. 1 is a sectional view of a conventional pneumatic tool driving assembly;
Fig. 2 is an exploded perspective view of the first preferred embodiment of a pneumatic tool driving assembly for a pneumatic driven tool according to the present invention;
Fig. 3 is a perspective view of a trigger mechanism of the first preferred embodiment;
Fig. 4 is a sectional view of the first preferred embodiment;
Fig. 5 is an exploded perspective view of the second preferred embodiment of the pneumatic tool driving assembly for the pneumatic driven tool according to the present invention;
Fig. 6 is an assembled perspective view of the second preferred embodiment;
Fig. 7 is a fragmentary exploded perspective view of the third preferred embodiment of the pneumatic tool driving assembly for the pneumatic driven tool according to the present invention; and
Fig. 8 is an assembled perspective view of the third preferred embodiment.

Before the present invention is described in greater detail with reference to the accompanying preferred embodiments, it should be noted herein that like elements are denoted by the same reference numerals throughout the disclosure.

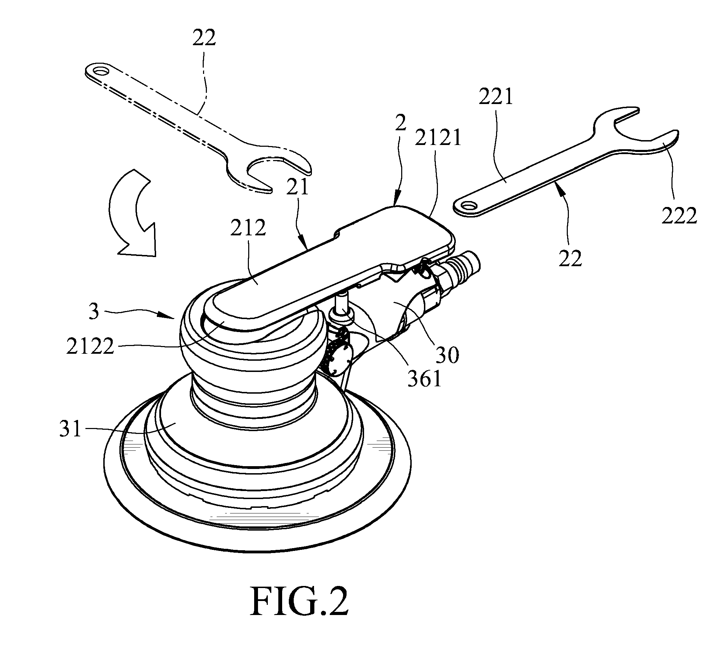

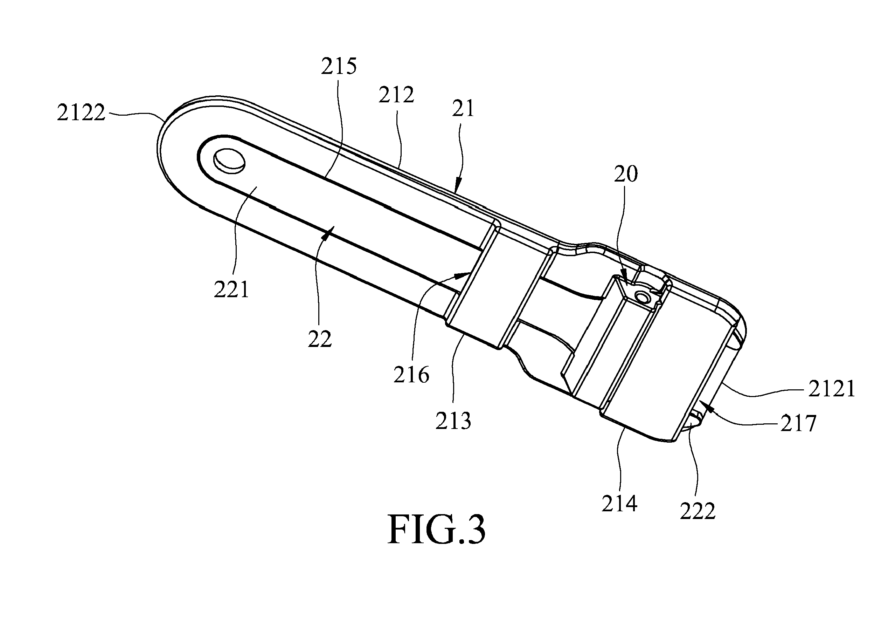

Figs. 2 to 4 illustrate the first preferred embodiment of a pneumatic tool driving assembly for a pneumatic driven tool 3 according to the present invention. The pneumatic driven tool 3 includes a tool housing 31 and a tool member 34 in addition to the pneumatic tool driving assembly. The tool member 34 may be a polish disc, a driver bit, a cutting blade, etc. The tool member 34 is mounted to the tool housing 31 through a screw nut 33 and a screw bolt 35.

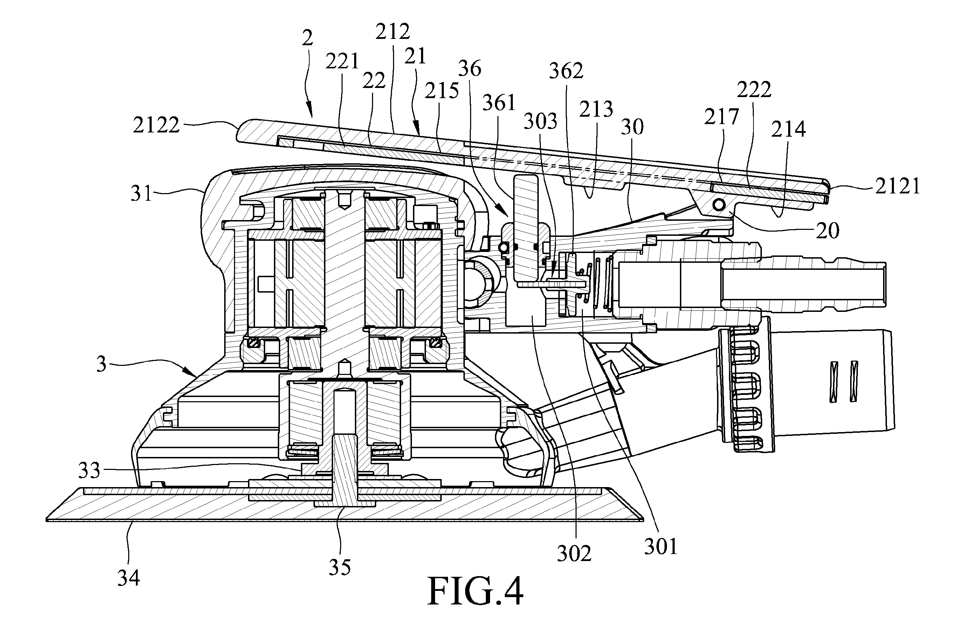

The pneumatic tool driving assembly includes: a valve housing 30 defining first and second chambers 301, 302 and a valve opening 303 that is disposed between the first and second chambers 301, 302 for fluid communication between the first and second chambers 301, 302; a valve mechanism 36 including a valve actuator 361 that extends into the valve housing 30, and a valve member 362 that is disposed in the valve housing 30 for closing the valve opening 303 and that is actuated by the valve actuator 361 to uncover the valve opening 303; anda trigger mechanism 2 pivoted to an exterior of the valve housing 30 so as to be pivotably pressible relative to the valve housing 30betweenanon-pressedposition (see Fig. 4) andapressed position (not shown). The trigger mechanism 2 drives the valve actuator 3 61 to move in a downward direction to actuate the valve member 362 to uncover the valve opening 303 when moving from the non-pressed position to the pressed position. The trigger mechanism 2 includes a wrench connector 21, a wrench 22 that is spaced apart from and that is detachably connected to the valve housing 30 through the wrench connector 21, and a pivot joint 20 that is connected to the wrench connector 21 and that is pivoted to the valve housing 30 so as to permit pivotal movement of the wrench connector 21, along with the wrench 22, relative to the valve housing 30 between the non-pressed position and the pressed position.

The wrench connector 21 has a top plate 212, a first U-shaped plate 213 and a second U-shaped plate 214. The top plate 212 has opposite first and second ends 2121, 2122. The first U-shaped plate 213 is disposed between and spaced apart from the first and second ends 2121, 2122 of the top plate 212, and extends downwardly from and cooperates with the top plate 212 to define a first slot 216 therebetween. The wrench 22 extends through the first slot 216 so as to be held detachably on the wrench connector 21. The second U-shaped plate 214 is spaced apart from the first U-shaped plate 213, is disposed adjacent to the first end 2121 of the top plate 212, and extends downwardly from and cooperates with the top plate 212 to define a second slot 217 therebetween. The wrench 22 extends removably through the second slot 217. The pivot joint 20 is integrally formed with and protrudes outwardly from the second U-shaped plate 214 such that the wrench 22 is connected detachably to the valve housing 30 through the wrench connector 21 when extending through the second slot 217.

The wrench 22 has an open-end wrench head 222 and a handle 221 extending from the open-end wrench head 222. The open-end wrench head 222 is received removably in the second slot 217. The handle 221 is exposed and accessible from and is slidable on a bottom side of the top plate 212 so as to facilitate removal of the wrench 22 from the wrench connector 21. The bottom side of the top plate 212 is formed with an open groove 215 for receiving the handle 221 therein. In this embodiment, the top plate 212 is disposed over and overlaps the entire length of the wrench 22. The wrench 22 is specifically adapted to be used for loosening and tightening the screw nut 33 for replacement of the tool member 34. Loss of the wrench 22 may cause great inconvenience for replacement of the tool member 34.

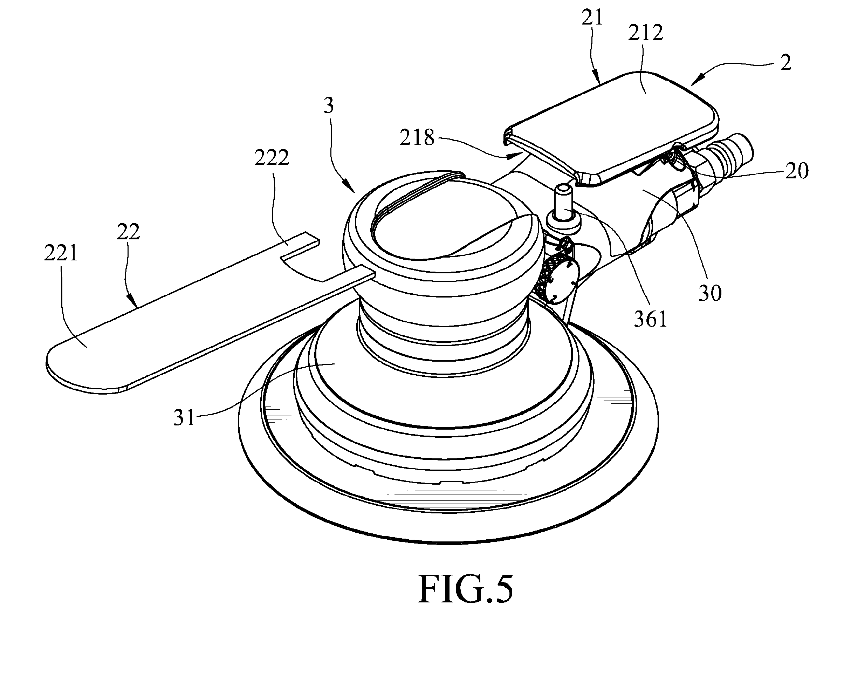

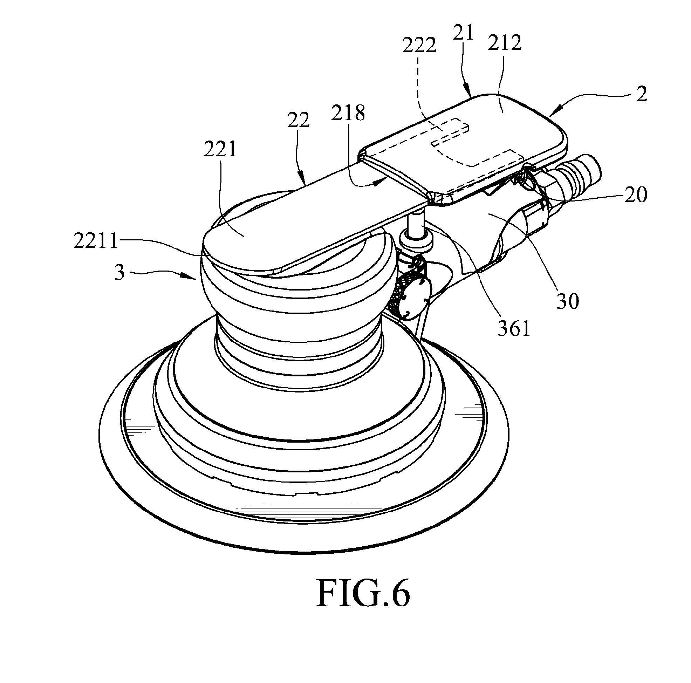

Figs. 5 and 6 illustrate the second preferred embodiment of the pneumatic tool driving assembly according to the present invention. The second preferred embodiment differs from the previous embodiment in that the top plate 212 of the wrench connector 21 extends a length to overlap the wrench head 222 but not the handle 221, so that the handle 221 is disposed outwardly of and is exposed from the wrench connector 21, thereby facilitating removal of the wrench 22 from the wrench connector 21.

In addition, the wrench connector 21 defines a generally U-shaped accommodating recess 218 that opens downwardly. The open-end wrench head 222 extends fittingly and detachably into the accommodating recess 218. The handle 221 is disposed outwardly of the wrench connector 21, is in contact with the valve actuator 361, and actively participates in the actuation of the valve actuator 361. Alternatively, the accommodating recess may be used for receiving a free end 2211 of the handle 221 that is disposed opposite to the open-endwrench head 222, while the open-end wrench head 222 is disposed outwardly of the accommodating recess 218.

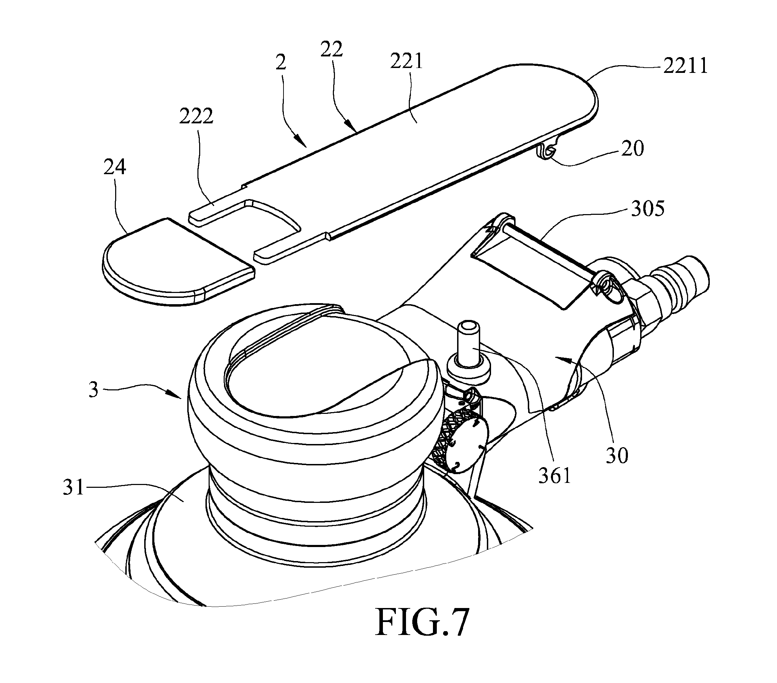

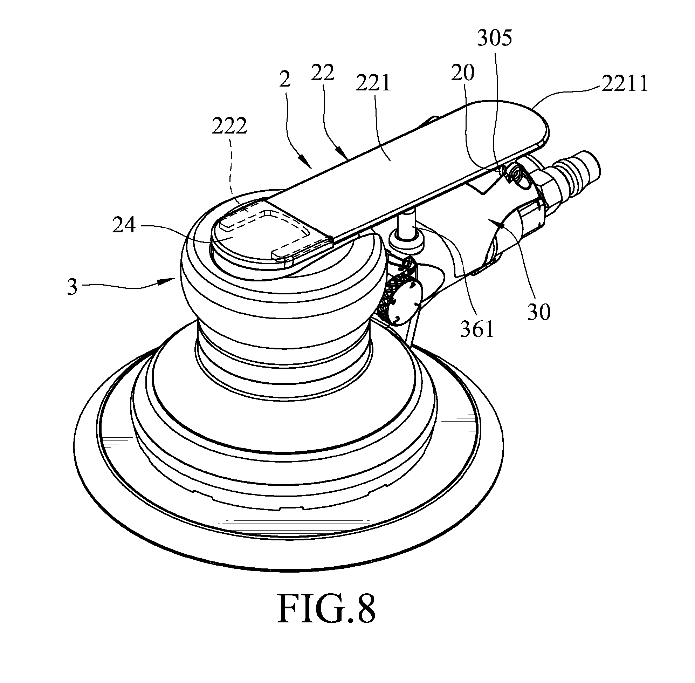

Figs. 7 and 8 illustrate the third preferred embodiment of the pneumatic tool driving assembly according to the present invention. The third preferred embodiment differs from the previous embodiments in that the wrench connector 21 is dispensed with in the third preferred embodiment and that the pivot joint 20 is integrally formed with and protrudes outwardly from the handle 221 of the wrench 22.

In this embodiment, the pivot joint 20 is disposed adjacent to the free end 2211, and is pivoted to the valve housing 30 through a pivot shaft 305.

The trigger mechanism 2 further includes a sleeve 24 that is detachably sleeved on the open-end wrench head 222. The handle 221 is in contact with the valve actuator 361.

By storing the wrench 22 in another component of the trigger mechanism 2 and/or by making the wrench 22 an active part of the trigger mechanism 2 of the pneumatic tool driving assembly of the present invention, the wrench 22 is easily accessible and observable by the user and the aforesaid drawbacks associated with the prior art can be alleviated.

While the present invention has been described in connection with what are considered the most practical and preferred embodiments, it is understood that this invention is not limited to the disclosed embodiments but is intended to cover various arrangements included within the spirit and scope of the broadest interpretation and equivalent arrangements.

## Claims

1. A pneumatic tool driving assembly **characterized by**:
a valve housing (30) defining first and second chambers (301, 302) and a valve opening (303) that is disposed between said first and second chambers (301, 302) for fluid communication between said first and second chambers (301, 302);
a valve mechanism (36) including a valve actuator (361) that extends into said valve housing (30), and a valve member (362) that is disposed in said valve housing (30) for closing said valve opening (303) and that is actuated by said valve actuator (361) to uncover said valve opening (303); and
a trigger mechanism (2) pivoted to an exterior of said valve housing (30) so as to be pivotably pressible relative to said valve housing (30) between a non-pressed position and a pressed position, said trigger mechanism (2) driving said valve actuator (361) to move to actuate said valve member (362) when moving from the non-pressed position to the pressed position, said trigger mechanism (2) including a detachable wrench (22) that is spaced apart from said valve housing (30), and a pivot joint (20) that is pivoted to said valve housing (30) and that brings said wrench (22) to pivot relative to said valve housing (30) between the non-pressed position and the pressed position.

2. The pneumatic tool driving assembly of claim 1, **characterized in that** said trigger mechanism (2) further includes a wrench connector (21), said wrench connector (21) having a top plate (212) which has opposite first and second ends (2121, 2122), and a first U-shaped plate (213) which is disposed between and spaced apart from said first and second ends (2121, 2122) of said top plate (212) and which is connected to and cooperates with said top plate (212) to define a first slot (216) therebetween, said wrench (22) extending removably through said first slot (216) so as to be held detachably on said wrench connector (21) .

3. The pneumatic tool driving assembly of claim 2, **characterized in that** said wrench connector (21) further has a second U-shapedplate (214) that is spaced apart from said first U-shaped plate (213), that is disposed adjacent to said first end (2121) of said top plate (212) and that extends downwardly from and that cooperates with said top plate (212) to define a second slot (217) therebetween, said wrench (22) extending removably through said second slot (217), said pivot joint (20) being integrally formed with and protruding outwardly from said second U-shaped plate (214).

4. The pneumatic tool driving assembly of claim 3, **characterized in that** said wrench (22) has an open-end wrench head (222) and a handle (221) extending from said open-end wrench head (222), said open-end wrench head (222) being received in said second slot (217), said handle (221) being exposed and accessible from and being slidable on a bottom side of said top plate (212) so as to facilitate removal of said wrench (22) from said wrench connector (21).

5. The pneumatic tool driving assembly of claim 1, **characterized in that** said trigger mechanism (2) further includes a wrench connector (21) that defines an accommodating recess (218), said pivot joint (20) being integrally formed with and protruding outwardly from said wrench connector (21), said wrench (22) having an open-end wrench head (222) and a handle (221) that extends from said open-end wrench head (222), one of said open-end wrench head (222) and a free end (2211) of said handle (221) extending fittingly and detachably into said accommodating recess (218), the other of said open-end wrench head (222) and said free end (2211) of said handle (221) being disposed outwardly of said wrench connector (21).

6. The pneumatic tool driving assembly of claim 1, **characterized in that** said wrench (22) has an open-end wrench head (222) and a handle (221) extending from said open-end wrench head (222) and having a free end (2211) that is disposed opposite to said open-endwrench head (222), said pivot joint (20) being disposed adjacent to said free end (2211) and being integrally formed with and protruding outwardly from said handle (221).

7. The pneumatic tool driving assembly of claim 6, **characterized in that** said trigger mechanism (2) further includes a sleeve (24) that is sleeved on said open-end wrench head (222), said handle (221) being in contact with said valve actuator (361).
